Europäisches Patentamt

European Patent Office

Office européen des brevets

(11) Publication number: **0 262 769**
**A2**

## (12) EUROPEAN PATENT APPLICATION

(21) Application number: 87306843.1

(22) Date of filing: 31.07.87

(51) Int. Cl.⁴: **F02B 29/08**

The title of the invention has been amended (Guidelines for Examination in the EPO, A-III, 7.3).

(30) Priority: 01.08.86 GB 8618851

(43) Date of publication of application:
**06.04.88 Bulletin 88/14**

(84) Designated Contracting States:
**BE DE ES FR GB IT NL SE**

(71) Applicant: **FORD MOTOR COMPANY LIMITED**
**Eagle Way**
**Brentwood Essex CM13 3BW(GB)**

(84) **BE ES GB IT NL SE**

(71) Applicant: **FORD-WERKE**
**AKTIENGESELLSCHAFT**
**Ottoplatz 2 Postfach 21 03 69**
**D-5000 Köln 21(DE)**

(84) **DE**

(71) Applicant: **FORD FRANCE SOCIETE ANONYME**
**344 Avenue Napoléon Bonaparte B.P. 307**
**F-92506 Rueil Malmaison Cedex(FR)**

(84) **FR**

(72) Inventor: **Ma, Thomas Tsoi-Hei**
**1 Collingwood Road South Woodham**
**Ferrers**
**Nr. Chelmsford Essex(GB)**

(74) Representative: **Messulam, Alec Moses et al**
**A. Messulam & Co. 24 Broadway**
**Leigh on Sea Essex SS9 1BN(GB)**

(54) **Internal combustion engine having two intake valves per cylinder.**

(57) The invention relates to an internal combustion engine having two intake ports per cylinder, poppet valves in the two intake ports, cams for activating the poppet valves and means for phase shifting the activation of one of the valves relative to the other.

The engine is operated so that at high air flow conditions the intake valves open together whereas under progressively lower air flow conditions one valve is retarded progressively to open later in the cycle, the degree of phase shift permitting the valve to remain open for sufficient time after the induction stroke to degrade the volumetric efficiency by allowing partial expulsion of the charge from the cylinder, thereby permitting regulation of the power output of the engine independently of any throttling in the air intake manifold.

# INTERNAL COMBUSTION ENGINE

The present invention relates to an internal combustion engine and is particularly concerned with an engine in which each cylinder has two intake ports with independently operated valves.

According to one aspect of the present invention, there is provided an internal combustion engine having two intake ports per engine cylinder, poppet valves in the two intake ports, cams for activating the poppet valves and means for phase shifting the activation of one of the valves relative to the other whereby at high air flow conditions the valves open together whereas under progressively lower air flow conditions one valve is retarded progressively to open later in the cycle, the degree of phase shift permitting said one valve to remain open for sufficient time after the induction stroke to degrade the volumetric efficiency by allowing partial expulsion of the charge from the cylinder, thereby permitting regulation of the power output of the engine independently of any throttling in the air intake manifold.

According to a second aspect of the invention, there is provided a method of operating an internal combustion engine having two intake ports per cylinder, poppet valves in the two intake ports, cams for activating the poppet valves and means for phase shifting the activation of one of the valves relative to the other, in which method at high air flow conditions the valves are opened together whereas under progressively lower air flow conditions one valve is retarded progressively to open later in the cycle, the degree of phase shift permitting said one valve to remain open for sufficient time after the induction stroke to degrade the volumetric efficiency by allowing partial expulsion of the charge from the cylinder, thereby permitting regulation of the power output of the engine independently of any throttling in the air intake manifold.

It has previously been proposed to provide two intake ports per cylinder to improve the volumetric efficiency. This improvement in efficiency is the result of better breathing resulting from larger curtain areas, that is to say valve opening cross sections, and more rapid rates of change in the curtain areas during opening and closing phases of the valves. These advantages are achieved in the engine of the present invention since the opening of the intake valves simultaneously under high load will result in a maximising of the volumetric efficiency.

It is also documented in the prior art that it is possible to avoid air pumping losses at low load by control of the intake valve closing times in place of resorting to throttling of the intake port. If the intake valve is closed early during the induction stroke then the volumetric efficiency is degraded by limiting the charge quantity but no pumping losses are encountered. Similarly, if the intake valve is allowed to remain open long enough after bottom dead centre to allow partial expulsion of the intake charge, then once again the volumetric efficiency is degraded. Hitherto, such delayed closing has been attempted by the use of two cams acting on the same valve one controlling the opening and the other closing of the valve, the timing of the opening cam being fixed and the other being variable to achieve a variable event timing.

The invention allows control of the power output without throttling of the intake manifold and thus permits significantly increased fuel economy under low load conditions by reducing pumping losses which are a major cause of energy loss at low load.

It has further been proposed that in an engine having two intake ports per cylinder, one intake port may be allowed to operate only when high air flow is required, namely at high speed and/or high load (charge density) conditions, to maximise the air flow under such conditions. Under lower air flow requirement, such as under partial load and/or low speed, the latter port is cut off in some way to give rise to increased air speed and turbulence in the charge taken in through the other port so as to improve combustion efficiency.

Previous proposals for cutting off one of the ports relied either on the use of a secondary valve such as a butterfly valve in the port or on deactivation of the poppet valve opening mechanism so as to maintain the valve permanently shut at partial load and/or low speed. Both these methods of control involve an on/off strategy and at some point it is necessary to change over from single port to two port operation, or vice versa. If such change over is effected at other than the cross over point between the torque curves for single port and two port operation, a sudden and noticeable jerk is produced which is unacceptable to the driver. Complex and sophisticated control techniques must therefore be adopted to avoid such jerking especially bearing in mind that the cross over engine speed between the two torque curves is itself load dependent. This jerking is accentuated by the fact that the change over must itself be carried out rapidly in order to respond as quickly as possible to the demands made by the driver. For example if the driver rapidly depresses the accelerator in order to overtake, it is vital that the change over from one port operation to full load operation should be instantaneous.

In the present invention, the advantages of high air speed at low load (which improves combustion efficiency) and maximum charge quantity at high load (which maximises volumetric efficiency) are achieved by a progressive variation in the phase of the operation of the two intake valves, while obviating the need for complex control equipment to change over between two different modes of operation.

In yet another prior art proposal, an engine is provided with a third valve which is not an inlet valve and acts only to permit part of the intake charge to be expelled with a view to reducing volumetric efficiency without resorting to throttling. In this engine, the excess intake air is vented to atmosphere and consequently no fuel must be introduced into the intake charge until the inlet valve and this third valve are closed. This engine therefore requires a high pressure fuel injection system and careful timing of the fuel injection to prevent the fuel from being discharged to atmosphere prior to combustion. In the present invention, the valve through which fuel is expelled is itself an inlet valve and any expelled charge is recycled to other cylinders. The fuel can therefore be metered in any conventional manner, that is by carburetion or by injection, and in the latter case, the injection timing is not critical.

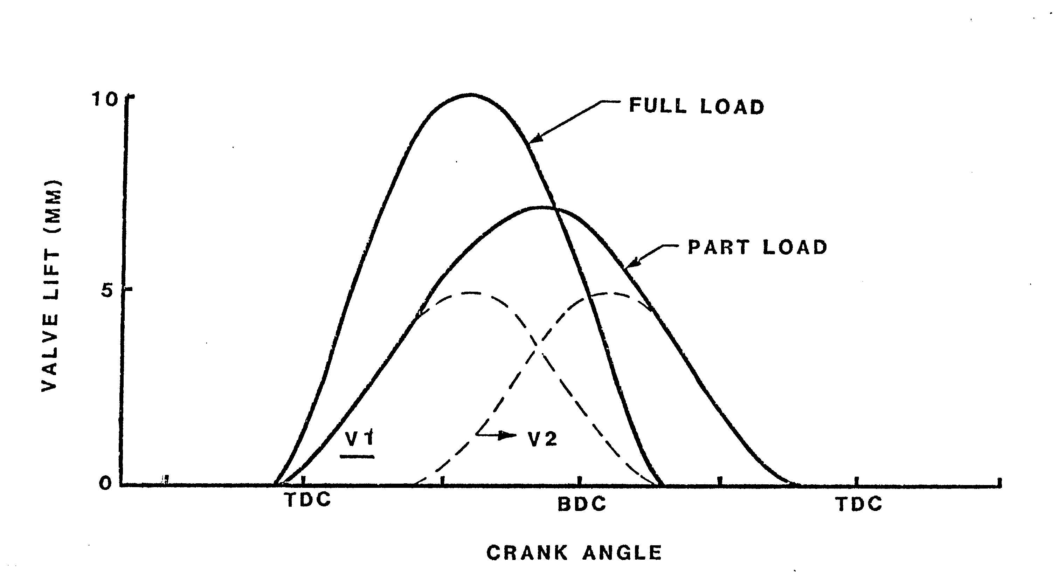

The invention will now be described further, by way of example, with reference to the accompanying drawing which is a graph showing the open cross section of the intake ports against crank angle.

The drawing shows four graphs of which two are in full lines and the other two are in dotted lines. The dotted lines labelled V1 and V2 show the open cross sectional areas of the individual valves as a function of crank angle when fully phase shifted relative to one another for part load operation. In the present embodiment of the invention, the timing of the first valve is fixed so that the graph V1 cannot move. On the other hand, the arrow on the graph V2 indicates that the second valve timing is variable from coincidence with the graph V1 to the illustrated position of the graph V2. It may be desirable for other reasons to vary the timing of the valve V1, for example to vary the intake/exhaust valve overlap, but this is not strictly relevant to the phase shifting proposed in the present invention.

The full line with the higher peak shows the combined effective valve opening area as a function of crank angle when both intake valves are opened and closed simultaneously. The other full line shows the combined valve opening area when the valves are phase shifted.

Under full load conditions, there is no phase difference between the valves and this yields a higher opening area to maximise the intake charge. The valves are both closed shortly after bottom dead centre (BDC) to trap the full charge allowing no back flow. Because the full line graph is the result of the summation of the two coincident dotted line graphs, its slope is greater than that of either of the graphs V1 and V2. If only one valve were used to achieve this rate of change the stresses on the cam shaft and the valve driving mechanism would be great and it is an advantage of a two valve system that not only is a higher maximum opening area achieved but that the valves can be opened more quickly for a given gradient on the ramps of the actuating cams.

At part load, the combined opening cross section does not achieve the same high maximum area because the areas of the graphs V1 and V2 are not being summed in phase. Initially only the graph V1 contributes to the combined opening cross section and accordingly the rising curve of the graph V1 and the part load combined graph are coincident. Similarly, the falling curve of the combined part load graph coincides with the graph V2 as by that time the first valve will have closed. Thus at all times during part load, the opening cross section is reduced causing throttling at the valves, which is now desirable, and increasing the charge velocity. This improves turbulence and combustion efficiency thereby assisting lean burn. The part load curve can also be seen to extend long beyond BDC and indeed can nearly reach TDC on the compression stroke. Thus the charge is partly expelled and the phase shifting controls the proportion and the total charge that is retained for combustion.

The expelled charge is returned to the intake manifold but does not risk total expulsion from the system as in a multi-cylinder engine the charge will be inducted by the next cylinder in the firing order. The charge in other words is recycled and at part load there is no serious problem caused by the pre-heating of the intake charge in this manner. The cycling of the charge in this manner is also beneficial in that the fuel is better vaporised and mixed prior to firing.

As the second valve closes later in the compression stroke, the compression ratio is reduced. For this reason, and in order to retain an acceptable degree of vacuum in the intake manifold, there is a limit on the extent to which delayed closing of an intake valve can be used to control volumetric efficiency. It is desirable therefore to retain some throttling in the intake manifold for example by the use of a butterfly valve in a carburettor but nevertheless the invention can achieve significant reductions in the pumping losses experienced during part load operation.

It is possible to counteract the effect of the delayed intake valve closing on the compression ratio by means of designs which enable the compression ratio to be varied by reducing the clearance volume at the end of compression. Many proposals have been made to achieve such variable compression but the preferred method is to employ a cranking mechanism which enables the locus of the big end to be varied from a circle.

The two full lines in the drawing only represent the extremes achieved by altering the phasing of the two intake valves and in practice the phasing will vary continuously between these extremes. The progressive change means that the driver will not be made aware of changes in the method of engine operation and also no complex mechanism is required to change between different distinct modes of engine operation as was the case in the prior art.

It will be appreciated that engines with two intake valves per cylinder are known per se and accordingly it is not deemed necessary within the context of the present invention to describe the engine layout and valve operating mechanism.

The valve may either be operated by cams which can be phase shifted relative to one another mounted on the same or different cam shafts, or the cams may act on the valves by way of phase shift mechanism.

## Claims

1. An internal combustion engine having two intake ports per cylinder, poppet valves in the two intake ports, cams for activating the poppet valves and means for phase shifting the activation of one of the valves relative to the other whereby at high air flow conditions the valves open together whereas under progressively lower air flow conditions one valve is retarded progressively to open later in the cycle, the degree of phase shift permitting said one valve to remain open for sufficient time after the induction stroke to degrade the volumetric efficiency by allowing partial expulsion of the charge from the cylinder, thereby permitting regulation of the power output of the engine independently of any throttling in the air intake manifold.

2. A method of operating an internal combustion engine of the type having two intake ports per cylinder, poppet valves in the two intake ports, cams for activating the poppet valves and means for phase shifting the activation of one of the valves relative to the other, in which method at high air flow conditions the valves are opened together whereas under progressively lower air flow conditions one valve is retarded progressively to open later in the cycle, the degree of phase shift permitting said one valve to remain open for sufficient time after the induction stroke to degrade the volumetric efficiency by allowing partial expulsion of the charge from the cylinder, thereby permitting regulation of the power output of the engine independently of any throttling in the air intake manifold.